# EUROPEAN PATENT SPECIFICATION

(11) **EP 4 674 585 B1**
(45) Date of publication and mention of the grant of the patent: **18.11.2026**
(21) Application number: 25204009.2
(22) Date of filing: 13.12.2023
(51) Int. Cl.: B29B 17/02, B29D 99/00, C08J 5/04, C08J 11/08, B29B 17/00, B29K 63/00, B29K 105/08, B29L 31/08, C08J 11/26, F03D 80/00

(54) **METHOD OF RECYCLING COMPOSITE MATERIAL**
VERFAHREN ZUR WIEDERVERWERTUNG VON VERBUNDMATERIAL
PROCÉDÉ DE RECYCLAGE DE MATÉRIAU COMPOSITE

(30) Priority: 13.12.2022 DK PA202270599
(43) Date of publication of application: 07.01.2026
(62) Document number(s) of the earlier application(s) in accordance with Art. 76 EPC: 23825390.0 / 4 633 894
(73) Proprietor: VESTAS WIND SYSTEMS A/S, 8200 Aarhus N (DK)
(72) Inventor: Rehmeier, Mie, 8470 Sabro (DK); Nielsen, Troels Bach, 8240 Risskov (DK); Baun, Torben Ladegaard, 8541 Skødstrup (DK)
(74) Representative: Vestas Patents Department

(56) References cited:
- WO-A1-2018/050189
- WO-A1-2021/191292
- US-A1- 2013 037 057
- US-A1- 2022 016 677
- US-B2- 10 953 407
- RANI MANJEET ET AL: "A review on recycling and reuse methods for carbon fiber/glass fiber composites waste from wind turbine blades", COMPOSITES PART B, ELSEVIER, AMSTERDAM, NL, vol. 215, 9 March 2021 (2021-03-09), XP086577524, ISSN: 1359-8368, [retrieved on 20210309], DOI: 10.1016/J.COMPOSITESB.2021.108768
- LA ROSA ANGELA ET AL: "Innovative Chemical Process for Recycling Thermosets Cured with Recyclamines by Converting Bio-Epoxy Composites in Reusable Thermoplastic-An LCA Study", MATERIALS, vol. 11, no. 3, 28 February 2018 (2018-02-28), pages 353, XP055915921, DOI: 10.3390/ma11030353

## Description

### FIELD OF THE INVENTION

The present invention relates to a method of recycling composite material, such as waste composite material from wind turbine blades or other objects.

### BACKGROUND OF THE INVENTION

A review of recycling of waste composite material is presented in Karuppannan Gopalraj, S., Kärki, T. A review on the recycling of waste carbon fibre/glass fibre-reinforced composites: fibre recovery, properties and life-cycle analysis. SN Appl. Sci. 2, 433 (2020). https://doi.org/10.1007/s42452-020-2195-4.

Recent developments in recycling technologies allows recycling of epoxy-based composite material in a two-step process. The first process step breaks down the epoxy and allows for separation of the various components of the composite material including a fiber fraction. This separation step is performed by soaking the composite material in an acid solution. For large structures like wind turbine blades and without heating this process can take tens of hours and thereby require substantial capacity at the recycling site.

A known method of chemically recycling composite material is disclosed in La Rosa, Angela & Blanco, Ignazio & Banatao, Diosdado & Pastine, Stefan & Björklund, Anna & Cicala, Gianluca. (2018). Innovative Chemical Process for Recycling Thermosets Cured with Recyclamines® by Converting Bio-Epoxy Composites in Reusable Thermoplastic-An LCA Study. Materials. 11. 353. 10.3390/ma11030353.

When waste composite material is transported, it is usually cut into smaller pieces or coarsely shredded prior to transport. Even with these initiatives it is in most cases not possible to utilize the full load capacity of the container on a roadgoing truck (for example 25 tons) due to poor packing of composite waste (low global packing density).

In the best case only approximately 21 tons of material is carried, and in the worst case only half the load carrying capacity of the container is utilized. This increases the transport costs per ton of waste composite material and reduce the (energy) efficiency of recycling.

US10953407 discloses methods for recycling fibre composite source objects, such as wind turbine blades. In some embodiments, the method includes sectioning the wind turbine blades, crushing the wind turbine blade sections, tracking the progress of each blade through the process, and loading output materials into a suitable transportation vessel.

WO 2021/191292 A1 discloses a mobile on-site recycling system for recycling of composite materials such as wind turbine blades. The wind turbine blades are sectioned to a plurality of wind turbine blade parts in a first processing unit and subsequently mechanically crushed and/or grinded to composite material granulates in a second processing unit. The composite material granulates may further be subjected to thermal recycling and/or chemical recycling in a third processing unit. This document at least fails to disclose that the liquid which has contacted the composite material as part of the chemical recycling is captured and fed back onto the composite material by means of a circulation system, during the transportation of the container.

### SUMMARY OF THE INVENTION

A first aspect of the invention provides a method of recycling composite material, the composite material comprising reinforcement fibres embedded in a matrix material, the method comprising: loading the composite material into a container; treating the composite material in the container with a liquid; transporting the container to a recycling station, wherein the liquid degrades the matrix material of the composite material in the container during the transporting of the container; and at the recycling station, recycling the reinforcement fibres by separating them from the matrix material, wherein the container comprises a system configured to apply a liquid onto the composite material, wherein the system comprises a circulation system, and wherein the method further comprises capturing liquid which has contacted the composite material and feeding it back onto the composite material by means of the circulation system.

Optionally the liquid is sprayed onto the composite material, preferably by spraying the liquid from one or more nozzles within the container.

Optionally the composite material is composite material of a wind turbine blade.

Optionally the container is transported by a vehicle, such as a truck, train or ship, and preferably the composite material is in the container and transported with the container.

Optionally the method further comprising storing the container with composite material and liquid after arrival at the recycling station. Optionally the container is stored until a predetermined level of degradation of the composite material is realized.

Optionally the container is closed after loading the composite material into the container, and the container remains closed during the transporting of the container.

Optionally the composite material is removed from the container before the reinforcement fibres are recycled.

Optionally the composite material is loaded into the container as pieces of composite material.

Optionally the method further comprises dividing a part into the pieces of composite material before they are loaded into the container.

Optionally the dividing comprises cutting and/or shredding.

Optionally the part is cut by the liquid.

Optionally the pieces are beads, granules, flakes, chips, shreds, slices or sections.

Optionally at least some of the reinforcement fibres separated from the matrix material have a length greater than 10cm, or greater than 20cm.

Optionally the matrix material comprises a thermoset material, which may be cured.

Optionally the matrix material comprises a polymer.

Optionally the matrix material comprises a resin.

Optionally the matrix material comprises an epoxy resin.

Optionally the reinforcement fibres are separated from the matrix material at the recycling station by treating the composite material with a separation agent. Optionally the separation agent is a liquid.

Optionally the liquid and/or the separation agent comprises an acid, preferably with pH below 4, most preferably with a pH below 3. Optionally the acid is acetic acid.

Optionally the liquid and/or the separation agent chemically treats the matrix material.

Optionally the liquid and/or the separation agent comprises a solution of an active ingredient in water.

Optionally the liquid and/or the separation agent at least partially chemically disassembles the matrix material, for instance by dissolving or depolymerising the matrix material, or by solvolysis of the matrix material.

Optionally the liquid has the same chemical composition as the separation agent.

Optionally the liquid and/or the separation agent is at a temperature greater than 50degC or greater than 70degC as it treats the composite material.

Optionally the liquid is heated so that it is above an ambient temperature outside the container as it treats the composite material in the container.

Optionally the liquid and/or the separation agent is at a temperature less than 100 degC or less than 50deg C as it treats the composite material.

Optionally the liquid and/or the separation agent is at a temperature between 0degC and 100degC as it treats the composite material.

Optionally the liquid and/or the separation agent is at a temperature between 20degC and 50degC as it treats the pieces.

Optionally the composite material comprises non-composite material, which may or may not be degraded by the liquid.

A further aspect, not forming part of the claimed invention, provides a container for transporting composite material, the container comprising a system configured to apply a liquid onto the composite material, wherein the system comprises a circulation system configured to capture liquid which has contacted the composite material and feed it back onto the composite material.

Optionally the container further comprises a liquid refining station for separating dissolved and/or particulate composite material from the liquid.

Optionally the container further comprises a stock of liquid, preferably in a sump of the container, wherein the system is configured to apply liquid from the stock of liquid onto the composite material.

Optionally the liquid from the stock of liquid comprises an acid. Optionally the acid is acetic acid.

Optionally the circulation system comprises one or more nozzles in the container; and a pump configured to feed the liquid to the one or more nozzles.

Optionally the system comprise one or more nozzles configured to spray the liquid onto the composite material.

Optionally the system is configured to apply the liquid onto the composite material from above.

Optionally the container has a liquid-tight floor which inhibits leakage of the liquid.

Optionally, the container comprises a pressure release valve.

### BRIEF DESCRIPTION OF THE DRAWINGS

Embodiments of the invention will now be described with reference to the accompanying drawings, in which:
Figure 1 shows a wind turbine;
Figure 2 shows a system, not according to the invention, for recycling wind turbine blades, according to a first embodiment;
Figure 3 shows a container, not according to the invention, transporting softened blade sections;
Figure 4 shows a system for recycling wind turbine blades, according to a further embodiment;
Figure 5 shows a container at a softening and loading station;
Figure 6 shows a first layer of blade sections loaded into the container;
Figure 7 shows a second layer of blade sections loaded into the container;
Figure 8 shows a pile of four layers of blade sections;
Figure 9 shows the container in a closed state and the pile in a compressed state;
Figure 10 shows the container of Figure 9 being transported;
Figure 11 shows a system for recycling wind turbine blades, according to a further embodiment;
Figure 12 shows shreds of composite material being loaded into a container;
Figure 13 shows a large uncompressed pile of shreds in the container;
Figure 14 shows the pile in a compressed state;
Figure 15 shows the container over-filled with shreds;
Figure 16 shows the shreds compressed inside the container in a closed state;
Figure 17 shows the container of Figure 16 being transported;
Figure 18 shows an alternative container with a cooling/fire suppression system;
Figure 19 shows a system, not according to the invention, for recycling wind turbine blades, according to a further embodiment;
Figure 20 shows a station, not according to the invention, with a conveyor chute which immerses shreds of composite material in liquid softening agent; and
Figure 21 shows a station, not according to the invention, which sprays a stream of falling shreds with liquid softening agent.

### DETAILED DESCRIPTION OF EMBODIMENT(S)

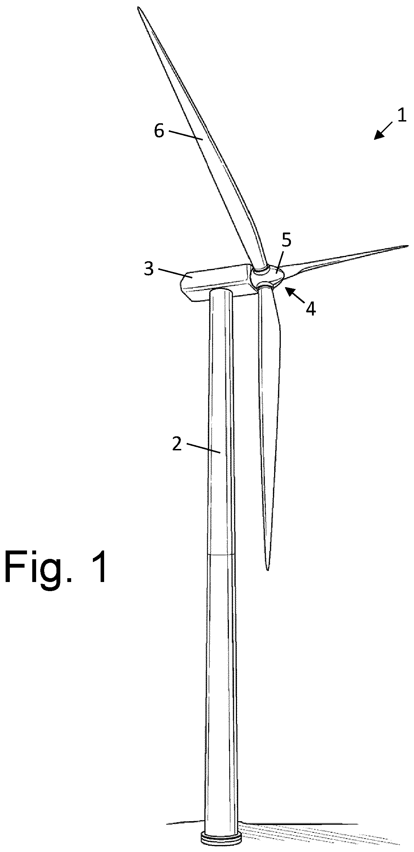

Figure 1 shows a wind turbine 1. The wind turbine 1 has a tower 2 and a nacelle 3 at the top of the tower 2. A wind turbine rotor 4 is connected to the nacelle 3 and arranged to rotate relative to the nacelle 3. The wind turbine rotor 4 comprises a hub 5 and multiple blades 6 extending from the hub 5.

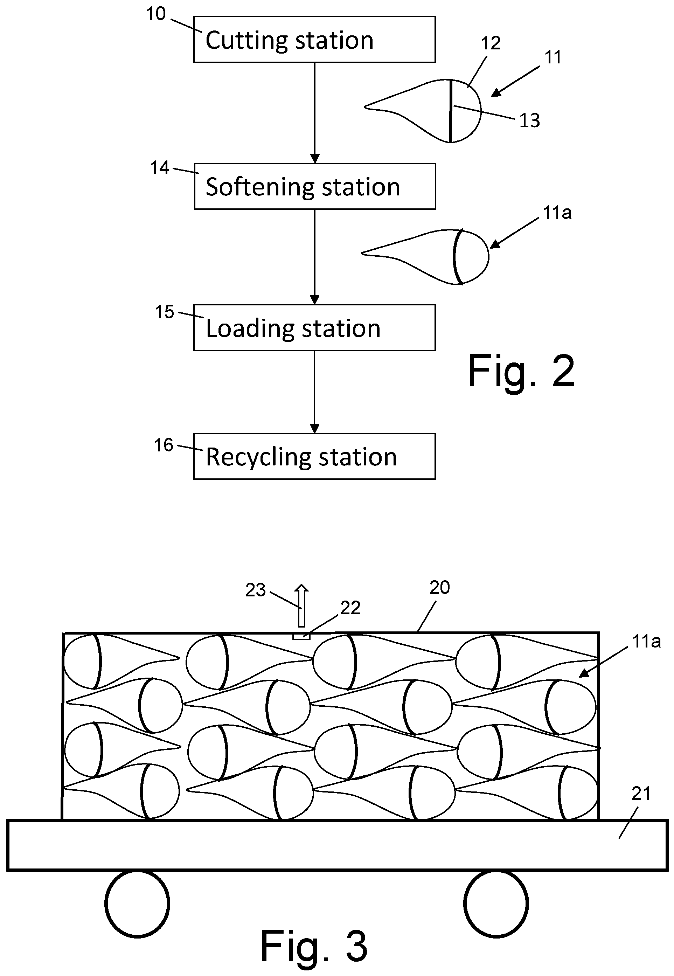

Figures 2 and 3 illustrate a method of recycling composite material from the blades 6, according to a first embodiment of the present invention.

First each blade 6 is divided into pieces of composite material. Each piece of composite material may also comprise non-composite materials, such as metal, polymer parts or coatings.

In this example, the blade 6 is divided at a cutting station 10 by cutting it into sections in a chordwise direction. A cross-sectional view of one of the sections 11 is shown in Figure 2. The section 11 comprises a shell 12 and a shear web 13.

The shell 12 and the shear web 13 are each principally made of composite material comprising reinforcement fibres embedded in a matrix material.

Most of the reinforcement fibres comprise glass fibres, although a small proportion of the fibres may comprise carbon fibres.

The matrix material may comprise a polymer, such as a polyester or an epoxy resin. The matrix material preferably comprises an amine cured thermoset epoxy resin.

The matrix material may comprise a cured thermoset material, such as an epoxy resin.

By way of example, the matrix material may comprise a Recyclamine^{®} based epoxy system described in https://www.abq-am.com/portfolio/chemistry/recyclamine-technology/F008?tab=1 (online at 16 October 2022) or as described in La Rosa, Angela & Blanco, Ignazio & Banatao, Diosdado & Pastine, Stefan & Björklund, Anna & Cicala, Gianluca. (2018). Innovative Chemical Process for Recycling Thermosets Cured with Recyclamines® by Converting Bio-Epoxy Composites in Reusable Thermoplastic-An LCA Study. Materials. 11. 353. 10.3390/ma11030353 (referred to below as La Rosa et al).

In some cases, the softening of the matrix material may involve chemical or physical degradation of the matrix material. It was found that softening the matrix advantageously involves swelling and fragmenting of the matrix material. In some cases, the softening of the matrix material may involve partial dissolving of the matrix material.

The matrix material of the sections 11 is softened by treating the sections 11 with a liquid softening agent at a softening station 14.

The chemical composition of the liquid softening agent will depend on the nature of the matrix material to be softened. For instance the liquid softening agent may comprise an organic solvent such as hexane or toluene; or an acid, preferably with pH below 4, most preferably with a pH below 3.

By way of example the liquid softening agent may comprise acetic acid. These have relatively low environmental impact and have been found to be effective at softening certain thermoset matrix materials.

Organic or aqueous solvents, and a catalyst, may also be included as part of the liquid softening agent.

In one embodiment the liquid softening agent comprises 70% acetic acid or more acetic acid.

The liquid softening agent transforms the sections 11 into softened sections 11a. Each softened section 11a may change shape under the force of its own weight or by applying an external force (not shown), becoming generally more flattened. This flattening is assisted by bending of the softened shear web 13 and/or reduction of stiffness of the blade shell 12 as indicated in the softened section 11a. The change of shape may occur as the sections are softened, or after the sections have been softened.

Before the softening, at least some of the sections 11 may have an aspect ratio greater than 2, or greater than 3, or greater than 10. The aspect ratio is a ratio between a largest dimension and a smallest dimension of the section 11. The flattening may increase the aspect ratio.

The sections 11 may be relatively large, and at least some of the sections 11 may have at least one dimension greater than 100cm, or greater than 200cm.

The softening agent may be applied at the softening station 14 in a variety of different ways, such as by spraying or by immersing the sections 11 in a bath of the softening agent.

The liquid softening agent may be heated so that it is above an ambient temperature as it treats the sections 11.

The softening agent may be at a temperature greater than 50degC or greater than 70degC as it treats the sections 11. A higher temperature was found to increase the speed of softening.

The softening agent may be at a temperature less than 100degC or less than 50degC as it treats the sections 11. A lower temperature will reduce energy requirements and evaporation of the softening agent. A temperature of between 20degC and 50degC has been found to represent a suitable compromise, where softening is relatively fast and evaporation is limited.

Optionally the softening agent is at ambient temperature as it treats the sections 11.

After the sections 11 have been softened at the softening station 14, they are loaded into a container 20, not according to the invention, as shown in Figure 3. The flattened shape of the softened sections 11a enables them to be packed into the container 20 with a higher packing density than would be possible in their unsoftened state.

Optionally the liquid softening agent 51 softens the matrix material by being absorbed into the matrix material. This may cause the matrix material to swell, causing a local increase in wall thickness of the shell 12 and the shear web 13. Such local swelling is counteracted by the global change of shape of the softened sections 11a which enables them to be packed together more tightly despite the increased local wall thickness. Hence, it was surprisingly possible to achieve packing of more composite material in a confined space (such as a container) even though extra material in the form of softening agent was added.

The softened sections 11a may form a pile of softened pieces in the container 20, with the softened sections 11a stacked one on top of each other.

The softening of the pieces 11 is initiated at the softening station 14 before the pieces are loaded into the container at the loading station 15, but the sections may remain soaked by the softening agent so that the softening process continues at the loading station 15, after the sections have been loaded into the container.

At least some of the softened sections 11 may change shape when they are within the pile, for example due to further softening or due to the weight of the softened sections above them in the pile. This change of shape may further increase a packing density of the pile. Furthermore, external force may also be applied to facilitate further increase in packing density of the pile.

The container 20 is then loaded onto a vehicle 21, such as a truck, train or ship. The vehicle 21 transports the container to a recycling station 16 where the softened sections 11a may be removed from the container 20 and the reinforcement fibres recycled by separating them from the matrix material, for instance by treating the softened sections 11a with a separation agent, such as a liquid separation agent.

Optionally, the container may be stored after arrival to the recycling station. This may be advantageous if the degradation of the composite material has not reached the level required upon arrival. For example if the temperature is relatively low, it may be most efficient to continue the process in the container for a while prior to continuing the recycling process in the recycling station. The storage may be continued until a predetermined level of degradation of the composite material is realized, which for example may correspond to a predetermined time/temperature exposure, a certain predetermined composition of the liquid softening agent, a certain amount of composite material being separated from the liquid softening agent.

Most typically the separation agent is an acid, preferably with pH below 4, most preferably with a pH below 3. By way of example the acid may be acetic acid. Organic or aqueous solvents, and a catalyst, may also be included.

The separation agent may have the same chemical composition as the liquid softening agent. The separation agent may comprise the same active compounds as the liquid softening agent with different concentrations and/or ratio.

Optionally the separation agent is a recycling solution of acetic acid which is applied as described in La Rosa et al, by placing the sections in a dilute (25%) acetic acid recycling bath of 70 degC for 1 h. Once the thermoset matrix is fully dissolved or degraded to a degree where the reinforcement fibres are released, the reinforcement fibres can be removed from the recycling solution, rinsed for example in water, and dried at room temperature. To reclaim the epoxy, the acidic recycling liquid may for example be neutralized with sodium hydroxide base (NaOH) under suitable conditions for example to facilitate depolymerisation of the epoxy.

By transporting the composite material in relatively large pieces, relatively long reinforcement fibres can be recovered at the recycling station 16, for example with a length greater than 10cm, or greater than 20cm or greater than 50cm or greater than 100cm. This is particularly useful for carbon fibre which has high value as a recycled product.

The liquid softening agent may be removed from the softened sections 11a before they are loaded into the container 20, but more preferably at least some of the softening liquid remains in contact with the softened sections 11a, thereby degrading the matrix material in the container 20 during the transporting of the container 20. This degradation may be advantageous since it initiates the chemical treatment process earlier, thereby saving time and/or space at the recycling station 16. Further, it may reduce or even remove the requirement of providing heating during the degradation of the matrix as time is less restricted.

The container 20 is closed after loading the sections 11a into the container and remains closed during the transporting of the container.

Fumes may be generated by the degradation process, and the container 20 may have a pressure release valve 22 which enables such fumes 23 to escape.

The pressure in the container 20 may be increased by the degradation process, and the pressure release valve 22 may ensure that the pressure in the container does not go too high.

The softening process may be initiated at the softening station 14, or it may be initiated at the cutting station 10 by spraying liquid softening agent onto the sections 11 as part of dust retention, and/or by using the liquid softening agent as a jet to cut the blade. The liquid softening agent may enhance the cutting process.

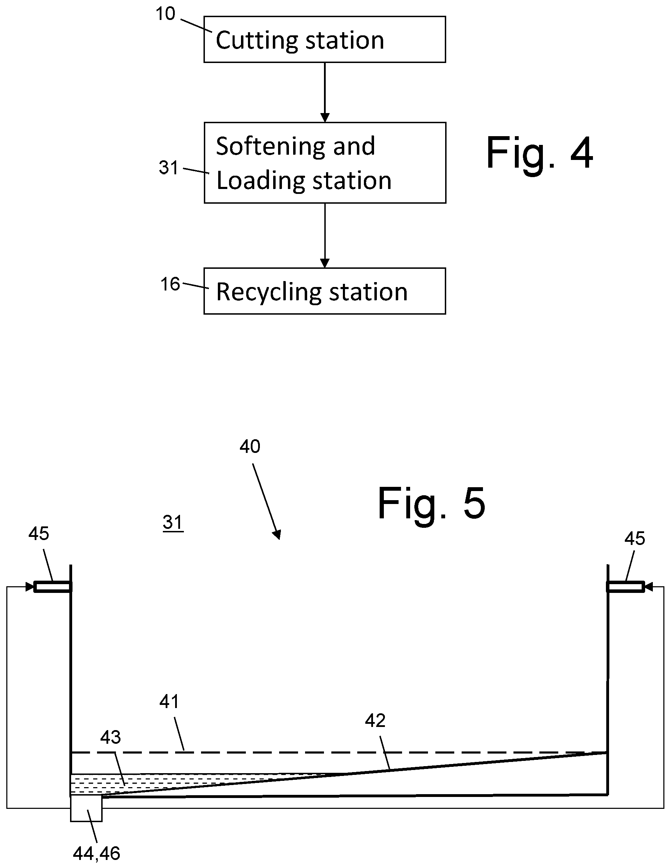

Figures 4-10 illustrate a method of recycling composite material according to a second embodiment of the present invention. Certain elements of Figures 4-10 are also shown in Figures 2 and 3. These elements are given the same reference number and will not be described again.

In Figure 2 the sections 11 are softened at a softening station 14, then the softened sections 11a are loaded at a loading station 15. In Figure 4, the sections are both softened and loaded at a softening and loading station 31 as shown in Figures 5-9.

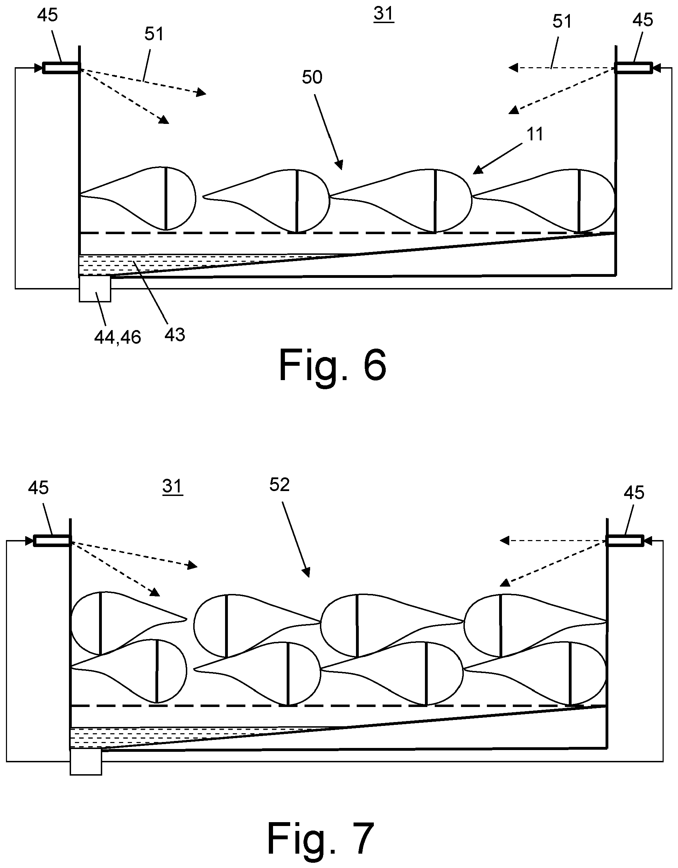

A container 40 for transporting composite material is provided at the station 31. Unlike the more conventional container 20 of Figure 3, not according to the invention, the container 40 comprises a system configured to apply a liquid softening agent onto the composite material - in this case nozzles 45 configured to spray liquid softening agent 51 onto the composite material as shown in Figure 6.

The chemical composition of the liquid softening agent 51 may be as described in the previous embodiment, so will not be described again.

The container 40 has a liquid-tight floor 42 which inhibits leakage of the liquid, and a grid 41 which acts as a false floor. The space under the grid 41 provides a sump which stores a stock 43 of the liquid softening agent 51.

Optionally the liquid softening agent 51 may be heated so that it is above an ambient temperature outside the container 40 as it treats the sections. Suitable temperatures are given in the previous embodiment and will not be described again. By way of example the liquid softening agent 51 may be heated by a heating element in the sump.

A circulation system is configured to capture liquid which has contacted the composite material and feed it back onto the composite material. The circulation system comprises a pump 44 configured to feed the liquid from the stock 43 to the nozzles 45. Piping for the circulation system may be arranged in the container walls, container floor and/or container ceiling.

It was found to be highly advantageous that the circulation system comprises a liquid softening agent refining station, 46, which may be integrated with the pump, the circulation system or a separate component of the container. The softening agent may degrade the composite material and particularly the matrix material physically and/or chemically so the liquid softening agent over time may contain growing amounts of dissolved (for example via chemical disassembling of the resin) or particulate (for example via swelling disintegration) solid matrix material, reinforcement fibres or other constituents of the composite material released during the transportation. A liquid softening agent refining station may separate such composite material elements transported in the liquid softening agent from the liquid softening agent for example by filtering, settling chambers, cooling traps, a combination of these or other known liquid refining techniques. This allows the liquid softening agent to retain the active process during the transport and reduce the wear and risk of plugging of the circulation system and hence improve efficiency of the recycling method and the container.

The refining station is preferably arranged in the container wall or the container floor. The refining station may be equipped with a storage chamber for material separated from the liquid softening agent, from which storage chamber it may easily be retracted after the container has reached the recycling station.

Unsoftened sections 11 may be loaded layer-by-layer into the container as shown in Figures 6-8. As the sections 11 are loaded, the system is configured to spray the liquid softening agent 51 onto the sections 11 from above.

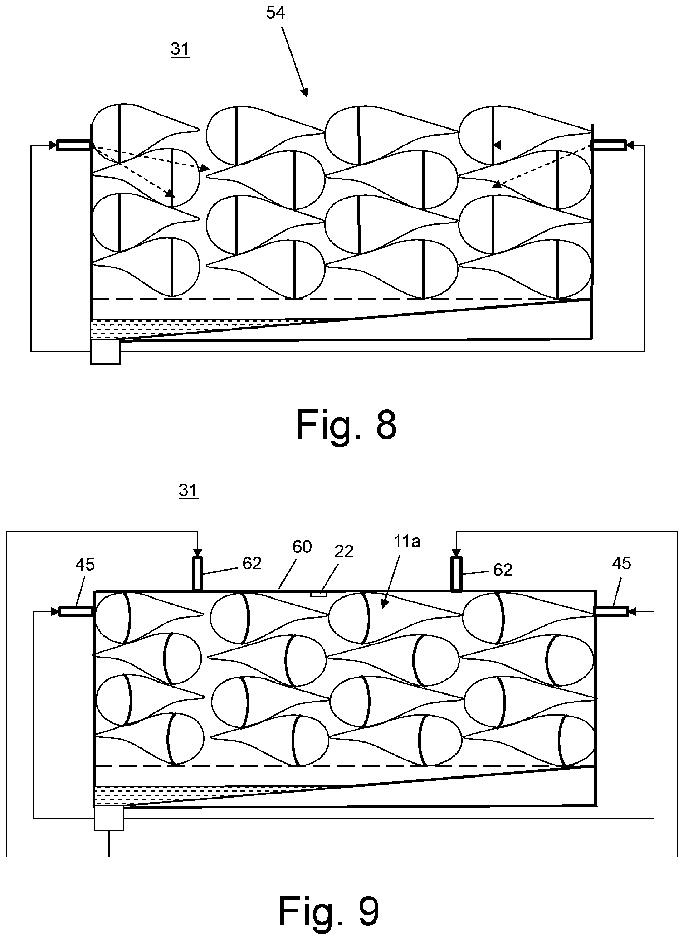

Figure 6 shows a first layer 50 of the sections 11, Figure 7 shows a pile 52 formed from two layers, and Figure 8 shows a pile 54 formed from four layers.

The pile 54 illustrated in Figure 8 is relatively ordered, but this is schematic only and more typically the pile 54 will be less ordered since the blade sections will be a variety of different shapes and sizes.

As in the previous embodiment, the liquid softening agent 51 transforms the sections 11 into softened sections 11a. Each section may change shape after it has been softened under the force of its own weight and/or from the weight of the sections above it in the pile, becoming generally more flattened as shown in Figure 9.

After the sections have been loaded as shown in Figure 8, a cover 60 is fitted as shown in Figure 9 to close the container. The cover 60 may compress the pile of softened pieces in the container by applying a downward compression force to the pile, thereby increasing the global packing density of the pile and enabling the container to be closed.

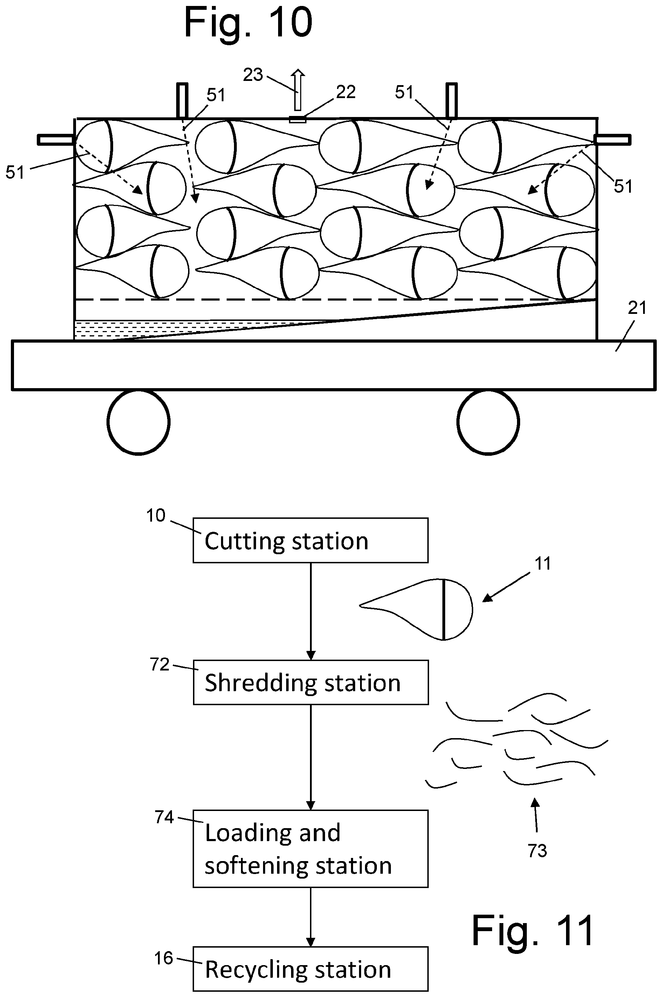

Optionally the cover 60 has further nozzles 62 which can spray liquid softening agent 51 onto the sections from above as in Figure 10.

The container 40 is then loaded onto a vehicle 21 as in the previous embodiment, then transported to the recycling station 16. The recycling process has been described above and will not be described again.

The liquid softening agent 51 may be applied to the composite material in the container during the transporting of the container. In this example, during the transporting of the container liquid softening agent 51 continues to be sprayed as shown in Figure 10, trickles down through the pile into the sump, and is continuously recycled by the pump 44 (which is not shown in Figure 10 for ease of illustration).

Compared with the embodiment of Figure 2 (where the container has no system to apply liquid softening agent onto the composite material) the continuous spraying process of Figure 10 provides more degradation of the matrix material in the container during the transporting of the container.

The liquid softening agent 51 may be heated, for instance by an electrical heating element in the sump or any other suitable method. Heat may be applied to speed up the degradation/swelling process to reach a predetermined level before the container 40 reaches the recycling station 16. In some cases, heating is not required due to extended transportation time and energy may hence be saved. In other cases, heating is used to prevent solidification of the softening agent due to low ambient temperature during transportation.

Other process parameters may also be changed during transport (i.e. increased and/or decreased) such as the acidity of the liquid softening agent, the circulation rate, or the volume of liquid softening agent in the sump.

In an alternative embodiment, not according to the invention, the softened sections 11a may be fully immersed in liquid softening agent during transport, but this would significantly add to the weight of the container. The circulation system ensures that the sections remain soaked in the liquid softening agent 51 during transport without requiring them to be fully immersed.

The stock 43 of liquid softening agent 51 may be drained from the sump at the recycling station 16, or it may be re-used for the next load of composite material.

Figures 11-17 illustrate a method of recycling composite material according to a further embodiment of the present invention. Certain elements of Figures 11-17 are also shown in Figures 2-10, and these elements are given the same reference number and not described again.

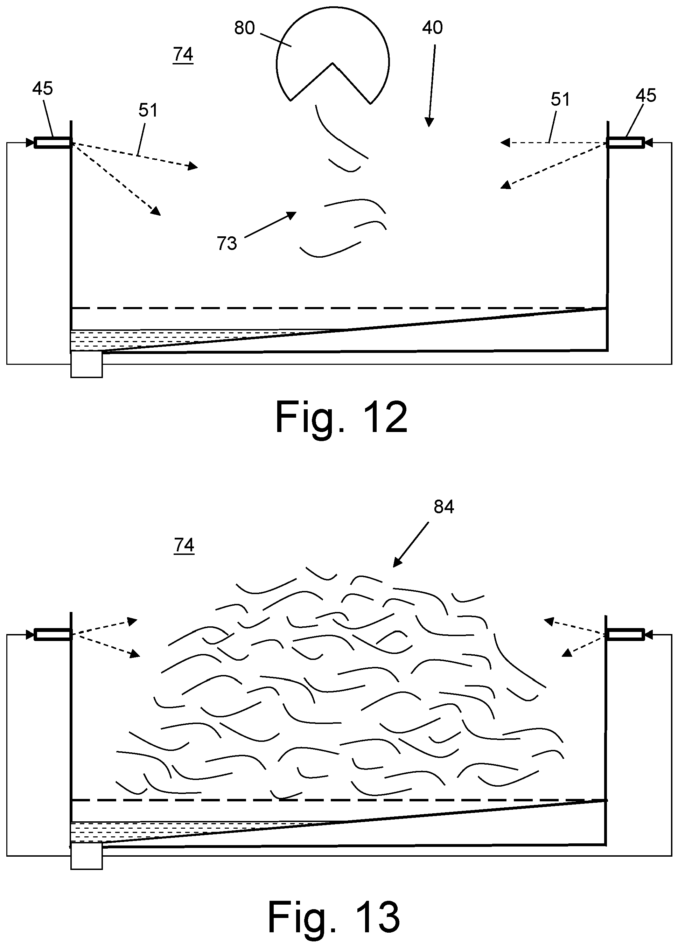

In Figures 2-10 the wind turbine blade is divided by cutting it into blade sections, and the relatively large sections constitute the pieces which are loaded into the container and transported to the recycling station 16. In the embodiment of Figures 11-17, the blade sections are further divided by being shredded at a shredding station 72 to provide shreds 73 which are loaded into the container 40 at a loading and softening station 74 as shown in Figures 12-16.

Before the softening, at least some of the shreds 73 may have an aspect ratio greater than 5, or greater than 10. The aspect ratio is a ratio between a largest dimension and a smallest dimension of the shred 73.

The shreds 73 are much smaller than the blade sections 11, but at least some of the shreds 73 may have at least one dimension greater than 10cm, or greater than 20cm.

At least some of the shreds 73 may have reinforcement fibres with a length greater than 10cm, or greater than 20cm.

The shreds 73 are loaded into the container in batches at the loading and softening station 74 from an excavator bucket 80 as shown in Figure 12. Liquid softening agent 51 is sprayed from the nozzles 45 onto the shreds 73 during the loading process.

A large dis-ordered pile 84 of shreds builds up as shown in Figure 13. At least some of the softened shreds may change shape when they are within the pile 84, for example due to softening or due to the weight of the softened shreds above them in the pile. This change of shape may increase a packing density of the pile 84 by allowing the shreds in the pile to settle more easily. The change of shape may comprise flattening and/or bending and/or twisting for example.

Optionally the excavator bucket 80 or another member for applying force may compress the pile 84 of softened shreds in the container by applying a downward compression force to the pile 84, thereby increasing the global packing density of the pile and enabling the container to be closed.

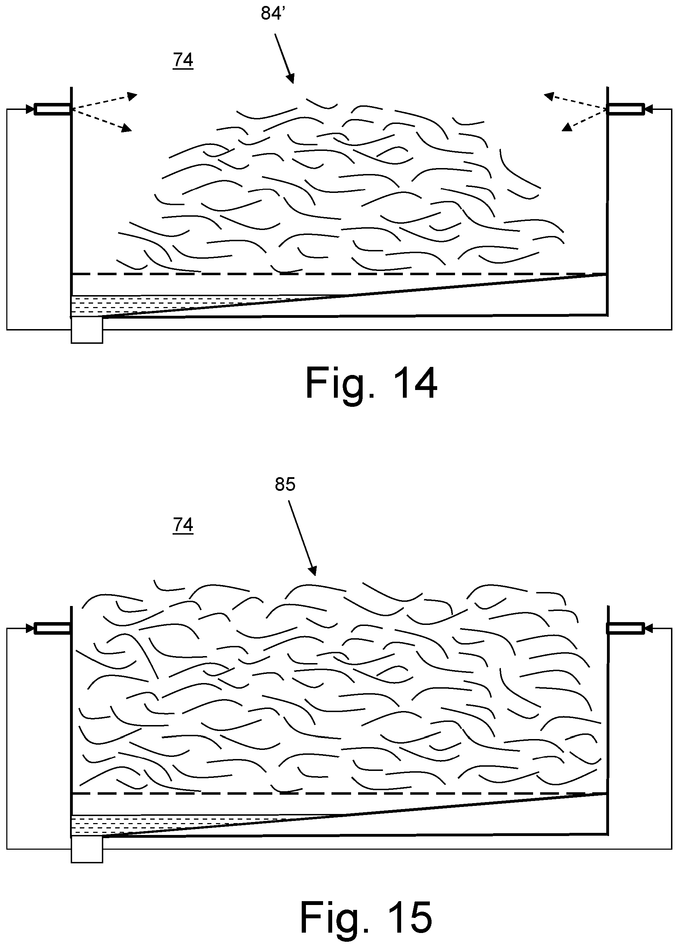

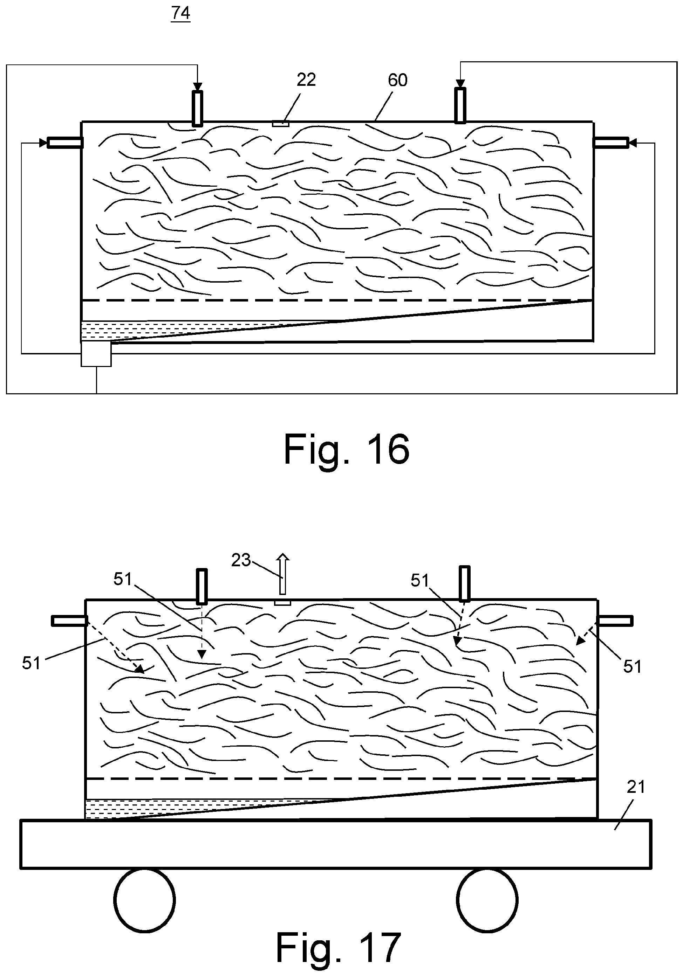

Figure 14 shows the pile 84 in a compressed state (indicated as a compressed pile 84'). The compressed pile 84' takes up less space so further shreds can be added as in Figure 15 to form a larger pile 85 which may be at the weight limit of the container. The pile 85 is then further compressed by the cover 60 during closing of the container as shown in Figure 16.

The liquid softening agent 51 may continue to be sprayed from the nozzles during the loading process of Figures 12-16, and during the transportation process of Figure 17. Similarly, the refining station for the liquid softening system may continue to be operated during the transportation process.

As in the previous embodiment, the circulation process ensures that the shreds remain soaked in the liquid softening agent 51 during transport.

The softening process may be initiated at the loading and softening station 74, or it may be initiated earlier. For instance the softening process may be initiated at the cutting station 10 by spraying liquid softening agent onto the sections 11 as part of dust retention, and/or using the liquid softening agent as a jet to cut the blade. The softening process may also be initiated or continued at the shredding station 72 by spraying liquid softening agent onto the sections 11 as part of dust retention.

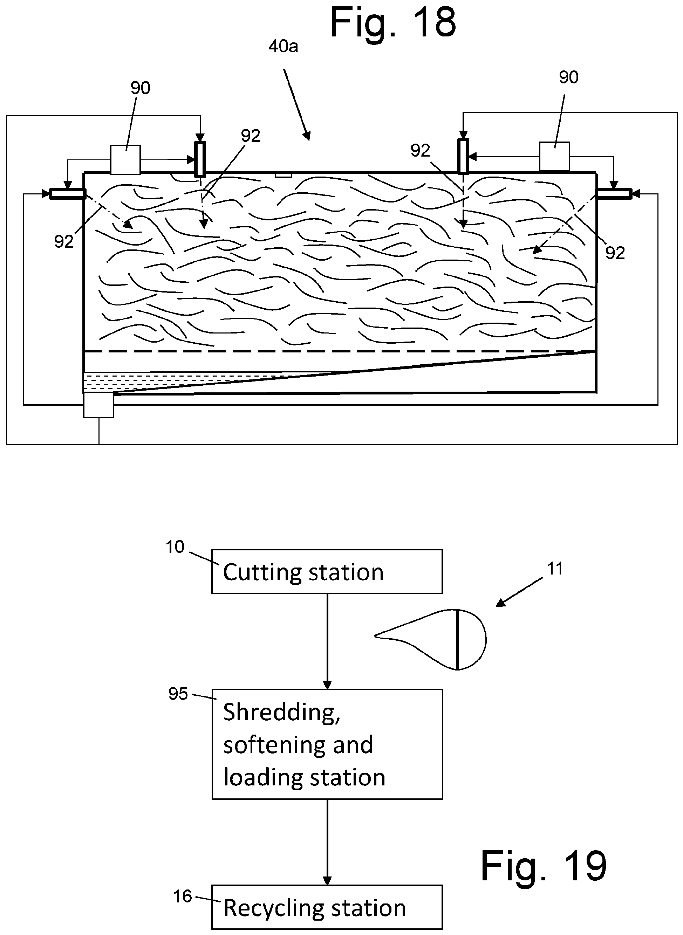

Figure 18 shows an alternative container 40a. The container 40a is similar to the container 40, so only the differences will be described. The container 40a comprises a cooling/fire suppression system where a cooling fluid 92 (for instance carbon dioxide, liquid nitrogen or water) is supplied into the circulation system upon activation by a sensor or manual switch (not shown). In this case the cooling fluid 92 is supplied from tanks 90 connected to the nozzles.

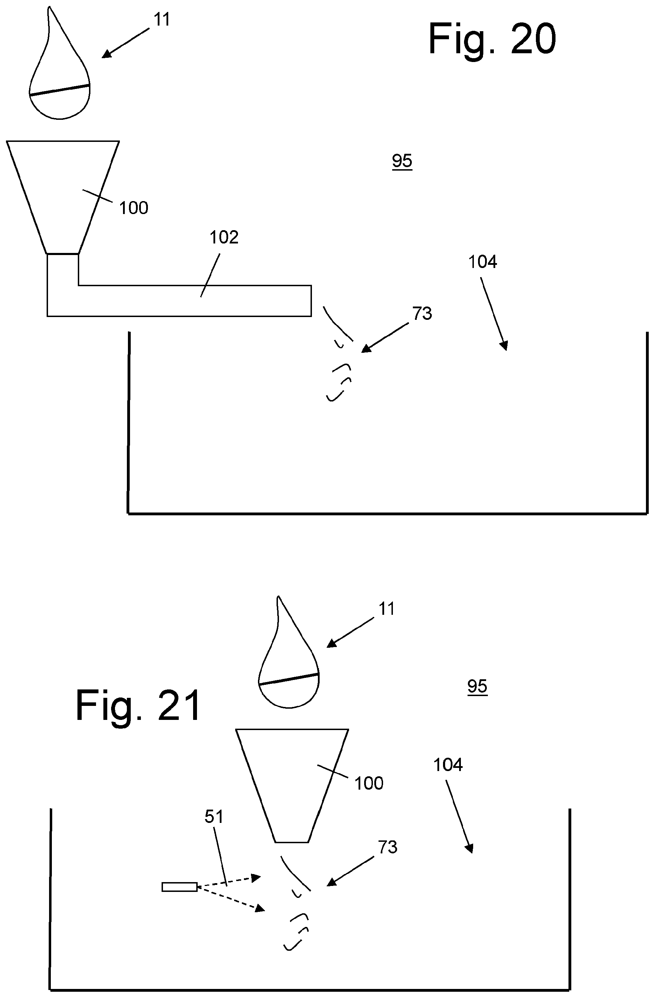

In Figures 11-17, the blade sections are shredded at a shredding station 72 to provide shreds 73 which are loaded into the container 40 at a loading and softening station 74. Figures 19-21 show a further embodiment, not according to the invention, in which the blade sections are shredded, softened and loaded at a shredding, softening and loading section 95 as shown in Figures 20 and 21.

Figure 20 shows a first embodiment, not according to the invention, of the shredding, softening and loading section 95. The sections are loaded into a shredder 100 which shreds the sections 11 and feeds the shreds 73 into a conveyor chute 102. The conveyor chute 102 contains a feed screw (not shown) immersed in liquid softening agent. As the shreds are fed along the conveyor chute 102 by the feed screw, they become soaked in the liquid softening agent before they fall into the container 104. Thus the shreds 73 are treated with the liquid softening agent as they are loaded into the container 104.

Figure 21 shows a second embodiment, not according to the invention, of the shredding, softening and loading section 95. A stream of shreds 73 falls under gravity from the shredder 100, and liquid softening agent 51 is sprayed onto the stream of shreds 73 from a nozzle which may or may not be part of the container 104. Thus the shreds 73 are treated with the liquid softening agent 51 as they are loaded into the container 104.

Heat may be generated by the degradation process, causing the temperature in the container to increase during transport. This may enhance the speed of the degradation process, so the container 20, 40, 40a, 104 in any of the above embodiments may be insulated to reduce heat loss - for instance by being lined with an insulating material or being doubled-walled.

In the embodiments above, the pieces of composite material are treated and transported in the form of sections 11a or shreds 73, but in other embodiments the pieces of composite material may have other forms such as beads, granules, flakes, chips or slices.

In the embodiments above, the liquid softening agent 51, and/or the liquid separation agent applied at the recycling station 16, chemically treats the matrix material. By way of non-limiting example the liquid may comprise alcohol or water in a critical condition; an acid such as acetic acid; or an organic solvent.

Optionally the liquid softening agent 51, and/or the liquid separation agent applied at the recycling station 16 comprises a solution of an active ingredient in water - for instance a solution of acetic in water.

Optionally the liquid softening agent 51, and/or the liquid separation agent applied at the recycling station 16 at least partially chemically disassembles the matrix material, for instance by dissolving and/or depolymerising the matrix material and/or by solvolysis of the matrix material.

The embodiments above describe various methods of transporting and recycling composite material from wind turbine blades 6, but the present invention can be applied to transporting and/or recycling composite material from other sources.

Although the invention has been described above with reference to one or more preferred embodiments, it will be appreciated that various changes or modifications may be made without departing from the scope of the invention as defined in the appended claims.

## Claims

1. A method of recycling composite material, the composite material comprising reinforcement fibres embedded in a matrix material, the method comprising: loading the composite material into a container; treating the composite material in the container with a liquid; transporting the container to a recycling station, wherein the liquid degrades the matrix material of the composite material in the container during the transporting of the container; and at the recycling station, recycling the reinforcement fibres by separating them from the matrix material, wherein the container comprises a system configured to apply a liquid onto the composite material, wherein the system comprises a circulation system, and wherein the method further comprises capturing liquid which has contacted the composite material and feeding it back onto the composite material by means of the circulation system during the transportation of the container.

2. The method according to any preceding claim, wherein the liquid is sprayed onto the composite material, preferably by spraying the liquid from one or more nozzles within the container.

3. The method according to any preceding claim, wherein the container is closed after loading the composite material into the container, and the container remains closed during the transporting of the container.

4. The method according to any preceding claim, wherein the reinforcement fibres are separated from the matrix material at the recycling station by treating the composite material with a separation agent.

5. The method according to any preceding claim, wherein the composite material is composite material of a wind turbine blade.

6. The method according to any preceding claim, wherein the container is transported by a vehicle, such as a truck, train or ship.

7. The method according to any preceding claims, further comprising storing the container with composite material and liquid after arrival at the recycling station, preferably the container is stored until a predetermined level of degradation of the composite material is realized.

8. The method according to any preceding claim, wherein the liquid and/or the separation agent comprises an acid, preferably with pH below 4, most preferably with a pH below 3.

9. The method according to claim 8, wherein the acid is acetic acid.

## Patentansprüche

1. Verfahren zum Recyceln von Faserverbundwerkstoff, wobei der Faserverbundwerkstoff Verstärkungsfasern umfasst, die in ein Matrixmaterial eingebettet sind, wobei das Verfahren Folgendes umfasst: Laden des Faserverbundwerkstoffs in einen Behälter; Behandeln des Faserverbundwerkstoffs im Behälter mit einer Flüssigkeit; Transportieren des Behälters zu einer Recyclingstation, wobei die Flüssigkeit das Matrixmaterial des Faserverbundwerkstoffs im Behälter während des Transportierens des Behälters abbaut; und an der Recyclingstation Recyclen der Verstärkungsfasern durch Trennen derselben vom Matrixmaterial, wobei der Behälter ein System umfasst, dass so konfiguriert ist, dass es eine Flüssigkeit auf der Faserverbundwerkstoff anwendet, wobei das System ein Zirkulationssystem umfasst, und wobei das Verfahren weiter das Auffangen von Flüssigkeit umfasst, die mit dem Faserverbundwerkstoff in Kontakt gekommen ist und deren Rückführung auf den Faserverbundwerkstoff mittels des Zirkulationssystems während des Transportierens des Behälters.

2. Verfahren nach einem vorstehenden Anspruch, wobei die Flüssigkeit auf den Faserverbundwerkstoff gesprüht wird, vorzugsweise durch Sprühen der Flüssigkeit aus einer oder mehreren Düsen innerhalb des Behälters.

3. Verfahren nach einem vorstehenden Anspruch, wobei der Behälter nach Laden des Faserverbundwerkstoffs in den Behälter verschlossen wird und der Behälter während des Transportierens des Behälters verschlossen bleibt.

4. Verfahren nach einem vorstehenden Anspruch, wobei die Verstärkungsfasern in der Recyclingstation durch Behandeln des Faserverbundwerkstoffs mit einem Trennmittel vom Matrixmaterial getrennt werden.

5. Verfahren nach einem vorstehenden Anspruch, wobei der Faserverbundwerkstoff ein Faserverbundwerkstoff eines Windkraftanlagenblatts ist.

6. Verfahren nach einem vorstehenden Anspruch, wobei der Behälter durch ein Fahrzeug transportiert wird, wie etwa einen Laufwagen, Zug oder Schiff.

7. Verfahren nach einem vorstehenden Anspruch weiter umfassend Lagern des Behälters mit Faserverbundwerkstoff und Flüssigkeit nach Ankunft in der Recyclingstation, wobei der Behälter vorzugsweise so lange gelagert wird, bis ein vorbestimmter Abbaugrad des Faserverbundwerkstoffs erreicht ist.

8. Verfahren nach einem vorstehenden Anspruch, wobei die Flüssigkeit und/oder das Trennmittel eine Säure umfasst, vorzugsweise mit einem pH-Wert unter 4, besonders bevorzugt mit einem pH-Wert unter 3.

9. Verfahren nach Anspruch 8, wobei die Säure Essigsäure ist.

## Revendications

1. Procédé de recyclage d'un matériau composite, le matériau composite comprenant des fibres de renforcement incorporées dans un matériau de matrice, le procédé comprenant : le chargement du matériau composite dans un conteneur ; le traitement du matériau composite dans le conteneur avec un liquide ; le transport du conteneur vers une station de recyclage, dans lequel le liquide dégrade le matériau de matrice du matériau composite dans le conteneur pendant le transport du conteneur ; et à la station de recyclage, le recyclage des fibres de renforcement en les séparant du matériau de matrice, dans lequel le conteneur comprend un système configuré pour appliquer un liquide sur le matériau composite, dans lequel le système comprend un système de circulation et dans lequel le procédé comprend en outre la récupération du liquide ayant été en contact avec le matériau composite et sa réintroduction sur celui-ci au moyen du système de circulation pendant le transport du conteneur.

2. Procédé selon une quelconque revendication précédente, dans lequel le liquide est pulvérisé sur le matériau composite, de préférence en pulvérisant le liquide à partir d'une ou plusieurs buses à l'intérieur du conteneur.

3. Procédé selon une quelconque revendication précédente, dans lequel le conteneur est fermé après le chargement du matériau composite dans le conteneur, et le conteneur reste fermé pendant le transport du conteneur.

4. Procédé selon une quelconque revendication précédente, dans lequel les fibres de renforcement sont séparées du matériau de matrice à la station de recyclage par traitement du matériau composite avec un agent de séparation.

5. Procédé selon une quelconque revendication précédente, dans lequel le matériau composite est un matériau composite d'une pale d'éolienne.

6. Procédé selon une quelconque revendication précédente, dans lequel le conteneur est transporté par un véhicule, tel qu'un camion, un train ou un navire.

7. Procédé selon l'une quelconque des revendications précédentes, comprenant en outre le stockage du conteneur contenant le matériau composite et le liquide après son arrivée à la station de recyclage, de préférence le conteneur est stocké jusqu'à ce qu'un niveau prédéterminé de dégradation du matériau composite soit atteint.

8. Procédé selon une quelconque revendication précédente, dans lequel le liquide et/ou l'agent de séparation comprend un acide, de préférence avec un pH inférieur à 4, et le plus préférentiellement avec un pH inférieur à 3.

9. Procédé selon la revendication 8, dans lequel l'acide est un acide acétique.
